# EUROPÄISCHE PATENTANMELDUNG

(11) **EP 1 919 128 A1**
(43) Veröffentlichungstag der Anmeldung: **07.05.2008**
(21) Anmeldenummer: 07020976.2
(22) Anmeldetag: 26.10.2007
(51) Int. Cl.: H04L 12/24, H04L 29/06

(54) **Vorrichtung und Verfahren zum Herstellen einer gesicherten Verbindung zwischen einem Endgerät und einem Internetserver**

(30) Priorität: 31.10.2006 DE 102006051878
(71) Anmelder: Vms Lutz Kolodziej GmbH, 15537 Grünheide (DE)
(72) Erfinder: Freese, Reiner, 14197 Berlin (DE); Kolodziej, Lutz, 15537 Grünheide (DE)
(74) Vertreter: Fischer, Uwe

(57) **Zusammenfassung**

Die Erfindung bezieht sich u. a. auf ein Verfahren zum Herstellen einer gesicherten, bidirektionalen Tunnel-Verbindung zwischen einem Endgerät und einem Server in einem globalen Netzwerk mit den Schritten: Einrichten des Endgeräts mit einem Tunnel-Client; Vorkonfigurieren des Endgeräts mit Zugangs- und Individualisierungsdaten; Verbinden des Endgeräts mit einem LAN und Abrufen einer IP- und Gatewayadresse; und Herstellen einer bidirektionalen Tunnel-Verbindung mit einem Verbindungsserver unter Verwendung der Zugangsdaten der Vorkonfigurierung. Der Verbindungsserver kann den Individualisierungsdaten des Endgerätes neue Zugangsdaten zuordnen und an das Endgerät übertragen, danach die erste Verbindung beenden, und unter Verwendung der neuen Zugangsdaten eine neue bidirektionale Tunnel-Verbindung zu einem anderen Server aufbauen.

## Beschreibung

### Technisches Gebiet

Die Erfindung betrifft ein Verfahren zum Herstellen einer gesicherten, bidirektionalen Verbindung zwischen einem Endgerät und einem Server in einem globalen Netzwerk. Die Erfindung betrifft ferner ein selbstinstallierendes Endgerät zur Durchführung eines solchen Verfahrens. Die Erfindung betrifft schließlich eine Anordnung zur Objektüberwachung enthaltend einen Verbindungsserver und wenigstens ein angeschlossenes Endgerät zur Aufnahme von Umgebungsbedingungen am Objekt.

### Stand der Technik

Ein globales Netzwerk ist zum Beispiel das Internet. Grundsätzlich unterliegt das Internet keinerlei Zugangsbeschränkungen. Auf Servern werden Daten und Programme hinterlegt, die unter Verwendung von Clients abgerufen werden können. Der Server ist also ein "passiver" Befehlsempfänger und der Client ein "aktiver" Befehlsgeber. Der Server ist eine Datenverarbeitungsanlage, die mit einem entsprechenden Serverprogramm ausgestattet ist. Der Client ist eine Software, die den Zugang zu dem Server ermöglicht. Zur Anzeige der auf dem Server hinterlegten Daten und Programme werden Browser verwendet. Der übliche Fall des Internets ist es, dass ein Personal Computer mit einem Client ausgestattet ist, mit dem die auf den Servern des Internets hinterlegten Informationen aufgerufen werden können.

Zum Aufbau einer Verbindung ist ein Datennetzwerk vorgesehen, das die Kommunikation z.B. über das Telefonnetz ermöglicht.

Es ist bekannt, sogenannte Webcams einzurichten. Webcams sind Kameras, die beispielsweise zur Betrachtung von Staugefahr auf Autobahnen oder zur Wetterbeobachtung aufgestellt werden. Die von diesen Kameras aufgenommenen Bilder werden an einen Server im Internet übertragen und sind dort für jedermann zugänglich.

Herkömmliche Verbindungen im Internet sind ungesichert, d.h. sie werden ohne zusätzliche Verschlüsselung aufgebaut. Die Daten werden direkt übertragen. Es gibt aber Verbindungen, die vertraulich gegenüber Dritten bleiben müssen. Solche Verbindungen sind zum Beispiel die Verbindungen zu Banken o.ä., wo persönliche oder sonstige vertrauliche Daten verwendet werden. Die Sicherung solcher Verbindungen erfolgt über eine Verschlüsselung, die mit Zugangsdaten zugänglich ist. Die Zugangsdaten sind dem Nutzer des Clients bekannt und werden vom Server vor Aufbau der gesicherten Verbindung abgefragt. Die Zugangsdaten, häufig eine Nutzerkennung und ein Password, werden von Hand in eine Eingabemaske eingegeben und anschließend vom Server verifiziert.

Es ist bekannt, die Zugangsdaten bei bestimmten Anwendungen auf dem Client zu hinterlegen, so dass diese bei einem erneuten Aufbau der gesicherten Verbindung nicht wieder eingegeben werden müssen.

Eine bidirektionale Verbindung ist so ausgestaltet, dass ein Endgerät damit steuerbar, konfigurierbar, usw. ist. Die Verbindung ermöglicht den Informationsfluss in beiden Richtungen, d.h. einerseits das Übertragen von Informationen auf den Server einerseits, andererseits aber auch vom Server in Richtung auf das Endgerät.

Aus der DE 203 16 299 U1 ist eine Anordnung zur Video-Fern-Bewachung von Liegenschaften bekannt. Bei der Anordnung werden Endgeräte in Form von Kameras direkt und ohne Internet an einen für jede Liegenschaft gemeinsamen Server angeschlossen. Die Server der jeweiligen Liegenschaften werden über einen Router und das Internet mit einem gemeinsamen Zentralserver verbunden. Dies ermöglicht den Zugang zu den Bildern der Kamera für einen Bewacher von beliebigen Orten über das Internet. Zusätzlich können Alarme ausgelöst werden. Ein Alarmsignal an den Zentralserver übertragen. Dieser leitet den Alarm an einen Bewacher zur weiteren Bearbeitung weiter.

Nachteilig bei bekannten Verbindungen ist es, dass die Endgeräte von Hand eingerichtet werden müssen. Es gibt Anwendungen, die sich an einen ungeschulten Nutzerkreis wenden, der nicht willens oder in der Lage ist, die Einrichtung eines Endgerätes selber vorzunehmen. Die Einrichtung der Kameras, Bewegungsmelder etc. einer Überwachungsanordnung muss durch das Fachpersonal erfolgen und ist entsprechend aufwändig.

### Offenbarung der Erfindung

Es ist Aufgabe der Erfindung, die Einrichtung von Verbindungen zwischen einem Endgerät und einem Internetserver zu vereinfachen und zu automatisieren. Erfindungsgemäß wird diese Aufgabe u. a. durch ein Verfahren mit den Merkmalen des Anspruchs 1 gelöst.

Ausführungsbeispiele der Erfindung umfassen beispielsweise folgende Schritte:
(a) Einrichten des Endgeräts mit einem Tunnel-Client;
(b) Vorkonfigurieren des Endgeräts mit Zugangs- und Individualisierungsdaten;
(c) Verbinden des Endgeräts mit einem LAN und Abrufen einer IP- und Gatewayadresse; und
(d) Herstellen einer bidirektionalen Tunnel-Verbindung mit einem Verbindungsserver unter Verwendung der Zugangsdaten der Vorkonfigurierung.

Ein Tunnel-Client ist eine Software, die in der Lage ist, eine gesicherte Verbindung aufzubauen. Ein Beispiel für eine solche gesicherte Verbindung ist eine Secure-Shell-Verbindung (SSH). Der Client stellt den aktiven Teil der Verbindung dar. Das Endgerät ist also so eingerichtet, dass es mit einer gesicherten Verbindung aktiv in einem globalen Netzwerk, etwa im Internet "surfen" kann.

Bei dem Verfahren wird das Endgerät beispielsweise werkseitig vorkonfiguriert und erhält Zugangsdaten. Solche Zugangsdaten sind zum Beispiel eine Nutzerkennung und ein Password. Diese ermöglichen es dem Client sich in einem Verbindungsserver einzuloggen. Außerdem weist das Gerät Individualisierungsdaten, zum Beispiel eine Seriennummer auf.

Das werkseitig eingerichtete Endgerät wird mit einem lokalen Netzwerk (LAN) verbunden. Das kann zum Beispiel durch Einstecken eines Verbindungskabels in einen Router erfolgen. Der Router erkennt das neue Gerät und vergibt eine IP- und eine Gatewayadresse. Anschließend stellt der Client eine bidirektionale Tunnel-Verbindung mit einem Verbindungsserver her. Dabei werden die bereits hinterlegten Zugangsdaten der Vorkonfigurierung verwendet. Mit anderen Worten: der Nutzer muss lediglich das Gerät aus dem Karton nehmen und das Kabel in den Router stecken. Es versteht sich, dass das Gerät auch mit Strom versorgt werden muss. Alle übrigen Schritte werden "automatisch" von der Software abgearbeitet, sobald die Stromversorgung und die physikalische Verbindung mit dem Router vorliegt.

Die Erfindung beruht auf der überraschenden Erkenntnis, dass es möglich ist, das Endgerät so weit vorzukonfigurieren, dass keine manuellen Einstellungen mehr erforderlich sind, sofern auf der anderen Verbindungsseite beim Server ebenfalls eine entsprechende Einstellung bezüglich der Zugangsdaten vorliegt. Serverseitige Voreinstellungen bezüglich von Individualisierungsdaten von Endgeräten sind dabei nicht gegeben!

Vorzugsweise ordnet der Verbindungsserver den Individualisierungsdaten des Endgerätes neue Zugangsdaten zu und überträgt diese an das Endgerät. Das Endgerät beendet die erste Verbindung und baut unter Verwendung der neuen Zugangsdaten eine neue bidirektionale gesicherte Verbindung zu einem anderen Server auf. Mit anderen Worten: der Verbindungsserver ist ein Erstverbindungsserver, in den sich das Endgerät nur einmal einloggt. Das Endgerät hat also neue Zugangsdaten erhalten, die speziell nur an dieses Endgerät vergeben wurde. Das hat den Vorteil, dass die werksseitigen Einstellungen und Zugangsdaten für alle Endgeräte gleich sind. Das ist einfacher und kostengünstiger. Die individuellen Zugangsdaten werden erst nach dem ersten Einloggen vergeben. Endgeräte, die noch nicht angeschlossen sind, belasten somit den Server nicht.

Es ist natürlich auch denkbar, bereits werkseitig individuelle Zugangsdaten zu vergeben. Im Verbindungsserver wird dann eine Liste zur Verifizierung der Daten geführt. Die Zugangsdaten sind dann bereits gerätespezifisch und auf dem Erstverbindungsserver hinterlegt.

Vorzugsweise sind die vorkonfigurierten Zugangsdaten für eine Vielzahl von Endgeräten identisch. Das vereinfacht die Herstellung. In einer Ausgestaltung der Erfindung wird die Verbindung in regelmäßigen Abständen überprüft und bei Unterbrechung erneut aufgebaut. Daneben wird auch serverseitig die Verbindung überwacht. Steht die Verbindung nach Ablauf einer einstellbaren Zeitspanne nicht wieder, wird einer Meldung generiert und an zuständiger Stelle ausgegeben. Dies ist insbesondere bei der Objektüberwachung vorteilhaft.

In einer besonderen Auslegung kann ein Endgerät auch mit einem zusätzlichen ISDN Anschluss ausgestattet sein. Bei Detektion eines Verbindungsausfalles wird dann eine alternative Verbindung per ISDN gewählt und der Tunnel wieder aufgebaut. Wird durch kontinuierliche Überprüfung erkannt, dass die prioritäre Verbindung wieder verfügbar ist, wechselt das Endgerät ohne äußeren Eingriff wieder zurück.

Besonders vorteilhaft ist es, dass innerhalb der Tunnel-Verbindung weitere Verbindungen ohne zusätzliche Sicherung aufgebaut werden. Diese Verbindungen können zur Steuerung, Konfiguration, Datenabfrage usw. der Endgeräte verwendet werden.

Vorzugsweise ist das Endgerät ein Überwachungsgerät, insbesondere eine Kamera. Das Überwachungsgerät kann mit alarmauslösenden Mitteln versehen sein. Solche alarmauslösenden Mittel sind zum Beispiel Bewegungsmelder, Infrarotdetektoren, Türkontakte, Glasbruchmelder oder bildverarbeitende Software, die einen Alarmfall aus den von einer Kamera aufgenommenen Bildern erkennt.

Die alarmauslösenden Mittel können im Alarmfall einen Datensatz mit alarmrelevanten Informationen an den Server übertragen. Solche alarmrelevanten Informationen können Informationen zu benachrichtigender Personen, Bilder von ausgewählten Überwachungskameras, Notrufnummern etc. umfassen.

Die Erfindung umfasst auch ein selbstinstallierendes Endgerät zur Durchführung des oben beschriebenen Verfahrens. Das Endgerät weist vorinstallierte Zugangs- und Individualisierungsdaten auf und ist mit einem Tunnel-Client eingerichtet, der bei Herstellung der Verbindung mit einer Netzwerkverbindung das Herstellen einer bidirektionalen Tunnel-Verbindung mit einem Verbindungsserver unter Verwendung der Zugangsdaten der Vorkonfigurierung auslöst. Das Einstecken des Kabels in den Router bzw. das Einschalten der Stromversorgung löst vorzugsweise bereits das Herstellen der Verbindung durch den Tunnel-Client aus.

Die Endgeräte können insbesondere in einer Anordnung zur Objektüberwachung verwendet werden. Die Anordnung enthält einen Verbindungsserver und wenigstens ein angeschlossenes Endgerät zur Aufnahme von Umgebungsbedingungen am Objekt, wobei das Endgerät direkt an ein LAN angeschlossen ist, über welches eine Verbindung mit dem Internet besteht, und das Endgerät über eine bidirektionale Tunnel-Verbindung im Internet mit dem Verbindungsserver verbunden ist. Eines der Endgeräte kann mit einem Tunnel-Client eingerichtet sein. Es kann mit alarmauslösenden Mitteln versehen sein, deren Alarmsignal über die Tunnel-Verbindung übertragen wird. Das Endgerät kann einen Speicher zum Speichern von alarmrelevanten Daten und Übertragungsmittel zum Übertragen des Alarmsignals zusammen mit den alarmrelevanten Daten aufweisen. Weiterhin können Steuermittel zum Steuern der Endgeräte vorgesehen sein, wobei die Steuerbefehle über die Tunnel-Verbindung an das Endgerät übertragen werden.

Ausgestaltungen der Erfindung sind Gegenstand der Unteransprüche. Ausführungsbeispiele sind nachstehend unter Bezugnahme auf die beigefügten Zeichnungen näher erläutert.

### Kurze Beschreibung der Zeichnung

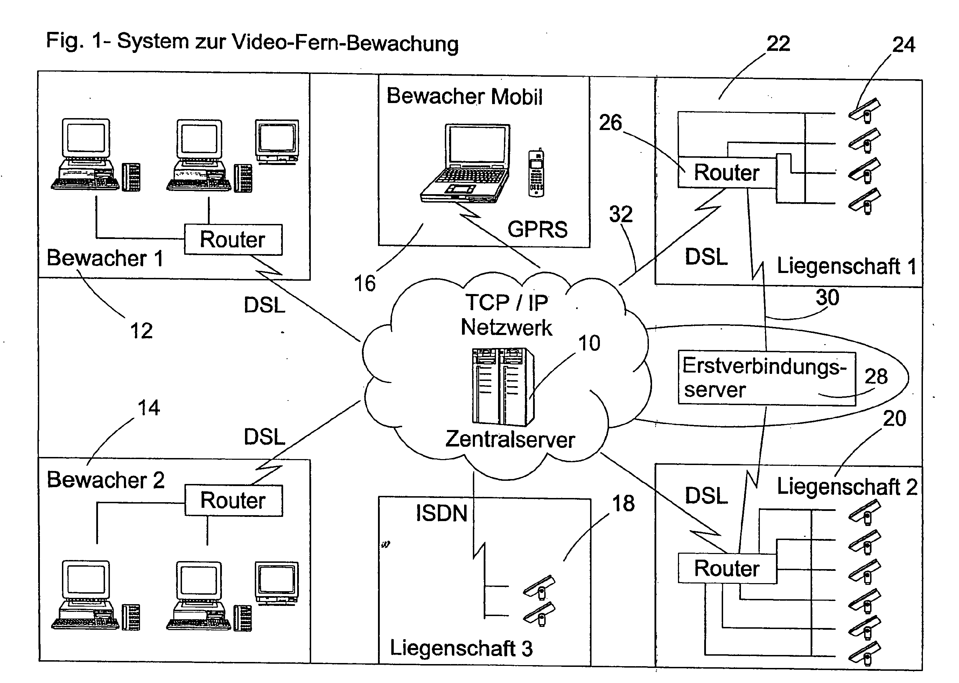

- Fig.1: zeigt schematisch eine webbasierte Überwachungsanlage.

### Beschreibung des Ausführungsbeispiels

Bei dem vorliegenden Ausführungsbeispiel ist es das Ziel, im Alarmfall einen Alarm durch einen Bewegungsmelder oder einen anderen geeigneten Sensor auszulösen. Dem Bewacher sollen dann Bilder einer Überwachungskamera zur Verfügung stehen,
wobei der Zugang zur Kamera autorisiert werden muss.

Ähnlich wie bei der bekannten Anordnung der DE 203 16 299 U1 ist die Anordnung webbasiert und weist die Vorteile der hohen Redundanz auf und verwendet Standardkomponenten. Das macht die Anordnung kostengünstig und leicht verfügbar.

Fig.1 zeigt eine webbasierte Überwachungsanordnung. Die Überwachungsanordnung weist einen Zentralserver 10 im Internet auf. Der Zentralserver ermöglicht den Zugang von jedem beliebigen Standort, hier repräsentiert durch zwei feste Standorte 12 und 14, die über eine DSL-Verbindung mit dem Internet verbunden sind, und einen mobilen Standort 16, der über GPRS angebunden ist.

Die Liegenschaften 18, 20 und 22 werden mit Kameras 24, Bewegungsmeldern und ähnlichen Überwachungsgeräten versehen. Diese allgemein als Endgeräte bezeichneten Geräte müssen an ihren Standorten montiert und eingerichtet werden. Die Einrichtung und Parametrisierung erfolgt "automatisch", d.h. ohne das Eingreifen von Fachpersonal vor Ort.

Bei der vorliegenden Anordnung wird die Kamera an ein lokales Netzwerk angeschlossen, das praktisch überall vorhanden ist. Ein solches lokales Netzwerk ist im vorliegenden Ausführungsbeispiel über einen Router 26 hinter einer DSL an das Internet angeschlossen.

Die Kamera nimmt eigenständig eine verschlüsselte Verbindung nach außen auf und erhält von außen Hilfe bei der Parametrierung. Die Verbindung ist eine reconnectable Tunnel-Verbindung, d.h. wenn die Verbindung unterbrochen wird, wird sie ohne manuelles Eingreifen erneut aufgebaut. Gegebenenfalls wird eine alternative Verbindung per ISDN-Einwahl hergestellt.

Werkseitig ist die Kamera mit einem Tunnel-Client ausgestattet. Weiterhin werden werkseitig eine individuelle Seriennummer, ein Benutzername und ein Password, sowie die IP-Adresse eines Erstverbindungsservers abgespeichert. Der Benutzername und das Password sind für alle Kameras einer Serie gleich.

Die Kamera wird in ihrer Lage montiert und auf das beobachtete Objekt ausgerichtet. Ein solches Objekt kann zum Beispiel eine Eingangstür oder dergleichen sein. Weiterhin wird eine Stromversorgung der Kamera eingeschaltet. Ein Verbindungskabel wird von der Kamera zu dem Router des lokalen Netzwerks gelegt und in einen Eingang des Routers eingesteckt. Der Router stellt eine Internetverbindung her.

Mit Herstellung der Kamera-Netzwerkverbindung wird der Tunnel-Client getriggert. Der Client empfängt vom Router eine IP-Adresse für die Kamera und die Gatewayadresse des Routers. Anschließend baut der Tunnel-Client eine Erstverbindung zu einem Erstverbindungsserver 28 auf. Der Erstverbindungsserver 28 fragt für den Verbindungsaufbau die Zugangsdaten der Vorkonfigurierung, d.h. zum Beispiel einen Benutzernamen und ein Password ab.

Nach dem Herstellen der Tunnelverbindung zwischen dem Erstverbindungsserver 28 und der Kamera fragt der Erstverbindungsserver 28 Individualisierungsdaten der Kamera, beispielsweise die Seriennummer der Kamera, ab. Anschließend generiert der Erstverbindungsserver neue, endgeräteindividuelle Zugangsdaten, die den Individualisierungsdaten der Kamera, also beispielsweise der Seriennummer, eindeutig zugeordnet sind.

Diese neuen, endgeräteindividuellen Zugangsdaten werden über die gesicherte Verbindung an den Client in die Kamera übertragen und dort gespeichert. Anschließend wird die Verbindung 30 durch die Kamera beendet. Die erzeugten neuen, endgeräteindividuellen Zugangsdaten werden von dem Erstverbindungsserver außerdem auf einen weiteren Server 10, nachfolgend Zentralserver 10 genannt, übertragen. Dieser weitere Server dient als Zentralserver für die Verwaltung der Überwachungsaktivitäten der Überwachungsanordnung.

Die Kamera baut nun mit den erhaltenen Zugangsdaten eine neue gesicherte Tunnel-Verbindung 32 mit dem Zentralserver auf. Über diese Verbindung werden alle Kommunikationswege hergestellt. Eine weitere Verschlüsselung ist nicht erforderlich. Die Kommunikationswege umfassen Steuerbefehle für die Kamera, Alarmrelevante Informationen, die zusammen mit einem Alarmauslösenden Signal übertragen werden, Bilder und Töne, die zur Überwachung abgefragt werden und dergleichen.

Der Erstverbindungsserver 28 generiert außerdem noch weitere endgeräteindividuelle Zugangsdaten, die den Individualisierungsdaten - wie zum Beispiel der Seriennummer -, eindeutig zugeordnet sind. Diese weiteren endgeräteindividuellen Zugangsdaten sind für den Benutzer der Kamera bestimmt und werden ebenfalls zu dem Zentralserver 10 übertragen. Mit diesen weiteren endgeräteindividuellen Zugangsdaten besteht für den Benutzer die Möglichkeit, Konfigurationsdaten, die der Kamera zugeordnet sind, zu verändern. Dies geschieht beispielsweise über eine Kommunikationsverbindung (z. B. Tunnelverbindung), mit Hilfe eines Browsers zwischen Benutzer und Zentralserver.

Wenn die Tunnelverbindung zwischen der Kamera und dem Zentralserver ausfällt, wird innerhalb einer einstellbaren Zeitspanne, zum Beispiel von 60 Sekunden, eine Meldung generiert. Die Einstellung der Zeitspanne erlaubt kurzzeitige Unregelmäßigkeiten auszublenden, sorgt aber für dauerhafte Verbindung.

Im vorliegenden Ausführungsbeispiel wurde eine Kamera als Endgerät beschrieben, die automatisch mit Einstecken in den Router eine gesicherte Verbindung aufbaut. Es versteht sich, dass die automatische Konfiguration auch mit beliebigen anderen Endgeräten möglich ist, die eine bidirektionale, gesicherte Verbindung benötigen, um über das Internet zugänglich zu sein. Die Erfindung ist nicht auf Überwachungskameras beschränkt, sondern kann auch in anderen Bereichen verwendet werden, wie etwa bei Wartung, Überprüfung von Zuständen und dergleichen von Haushaltsgeräten, Industriefertigungsmaschinen etc.

## Patentansprüche

1. Verfahren zum Herstellen einer gesicherten, bidirektionalen Verbindung zwischen Endgeräten, insbesondere Überwachungsgeräten, und einem vorgegebenen Zentralserver mit den Schritten:
- Verbinden der mit einem Tunnel-Client ausgestatteten und mit Zugangsdaten sowie Individualisierungsdaten, insbesondere einer Seriennummer, vorkonfigurierten Endgeräte mit jeweils einem lokalen Netzwerk (26) und Abrufen einer IP- und Gateway-Adresse von einem Router des jeweiligen lokalen Netzwerks und
- Herstellen jeweils einer bidirektionalen Tunnelverbindung zwischen den Endgeräten und einem Verbindungsserver, der mit den lokalen Netzwerken über ein globales Netzwerk verbunden ist, unter Verwendung der Zugangsdaten der Vorkonfigurierung, wobei die Zugangsdaten der Vorkonfigurierung für die Endgeräte identisch sind,
- wobei - nach dem Herstellen der jeweiligen Tunnelverbindung - der Verbindungsserver die Individualisierungsdaten des jeweiligen Endgeräts, insbesondere die jeweilige Seriennummer, über die jeweilige Tunnelverbindung von dem jeweiligen Endgerät abfragt, und
- wobei der Verbindungsserver den abgefragten Individualisierungsdaten eines jeden Endgeräts jeweils neue, endgeräteindividuelle Zugangsdaten zuordnet und diese endgeräteindividuellen Zugangsdaten sowohl zu dem vorgegebenen Zentralserver als auch über die jeweilige Tunnelverbindung an das jeweilige Endgerät (24) überträgt, danach die jeweilige Tunnelverbindung beendet wird und das jeweilige Endgerät unter Verwendung der neuen endgeräteindividuellen Zugangsdaten eine neue bidirektionale Tunnelverbindung (32) aufbaut, und zwar zu dem vorgegebenen Zentralserver (10).

2. Verfahren nach Anspruch 1, **dadurch gekennzeichnet, dass** der Verbindungsserver außerdem noch weitere endgeräteindividuelle Zugangsdaten generiert, die den Individualisierungsdaten des jeweiligen Endgeräts, insbesondere der jeweiligen Seriennummer, eindeutig zugeordnet sind und diese dem vorgegebenen Zentralserver übergibt, wo sie einem Benutzer ermöglichen können, die Konfigurationsdaten des jeweiligen Endgeräts über eine Kommunikationsverbindung, insbesondere einen Browser, zu verändern.

3. Verfahren nach einem der vorgehenden Ansprüche, **dadurch gekennzeichnet, dass** die Verbindung in regelmäßigen Abständen überprüft wird und bei Unterbrechung erneut aufgebaut wird.

4. Verfahren nach einem der vorgehenden Ansprüche, **dadurch gekennzeichnet, dass** über die Tunnel-Verbindung weitere Verbindungen ohne zusätzliche Sicherung aufgebaut werden.

5. Verfahren nach einem der vorgehenden Ansprüche, **dadurch gekennzeichnet, dass** das Endgerät ein Überwachungsgerät, insbesondere eine Kamera ist.

6. Verfahren nach Anspruch 5, **dadurch gekennzeichnet, dass** das Überwachungsgerät mit alarmauslösenden Mitteln versehen ist.

7. Verfahren nach Anspruch 6, **dadurch gekennzeichnet, dass** die alarmauslösenden Mittel im Alarmfall einen Datensatz mit alarmrelevanten Informationen an den Server (10) übertragen.

8. Selbstinstallierendes Endgerät (24) zur Durchführung eines Verfahrens nach einem der vorgehenden Ansprüche, **dadurch gekennzeichnet, dass** das Endgerät vorinstallierte Zugangs- und Individualisierungsdaten aufweist und mit einem Tunnel-Client eingerichtet ist, der bei Herstellung der Verbindung mit einem lokalen Netzwerk das Herstellen einer bidirektionalen Tunnel-Verbindung mit einem Verbindungsserver unter Verwendung der Zugangsdaten der Vorkonfigurierung auslöst.

9. Anordnung zur Objektüberwachung enthaltend jeweils mindestens ein Endgerät in mindestens zwei unterschiedlichen lokalen Netzen nach Anspruch 8, einen Verbindungsserver und einen Zentralserver, wobei der Verbindungsserver geeignet ist, eine Tunnelverbindung zu jedem der mindestens zwei Endgeräte unter Verwendung der Zugangsdaten der Vorkonfigurierung aufzubauen, von jedem Endgerät Individualisierungsdaten, insbesondere die jeweilige Seriennummer, abzufragen und den abgefragten Individualisierungsdaten eines jeden Endgeräts jeweils neue, endgeräteindividuelle Zugangsdaten zuzuordnen und diese endgeräteindividuellen Zugangsdaten sowohl zu dem Zentralserver als auch an das jeweilige Endgerät zu übertragen.

10. Anordnung Verfahren nach Anspruch 9, **dadurch gekennzeichnet, dass** der Verbindungsserver geeignet ist, außerdem noch weitere endgeräteindividuelle Zugangsdaten zu generieren, die den Individualisierungsdaten des jeweiligen Endgeräts, insbesondere der jeweiligen Seriennummer, eindeutig zugeordnet sind, diese an den Zentralserver zu übertragen, wo sie einem Benutzer ermöglichen sollen, Konfigurationsdaten des jeweiligen Endgeräts über eine Kommunikationsverbindung, insbesondere mit Hilfe eines Browsers, zu verändern.

11. Anordnung nach Anspruch 9 oder 10, **dadurch gekennzeichnet, dass** mindestens eines der Endgeräte mit alarmauslösenden Mitteln versehen ist, deren Alarmsignal über eine Tunnel-Verbindung zu dem Zentralserver übertragen wird.

12. Anordnung nach Anspruch 11, **dadurch gekennzeichnet, dass** das Endgerät einen Speicher zum Speichern von alarmrelevanten Daten und Übertragungsmittel zum Übertragen des Alarmsignals zusammen mit den alarmrelevanten Daten aufweist.

13. Anordnung nach einem der Ansprüche 9 bis 12, **dadurch gekennzeichnet, dass** Steuermittel zum Steuern der Endgeräte vorgesehen sind, wobei Steuerbefehle über die unter Verwendung der endgeräteindividuellen Zugangsdaten aufgebauten Tunnel-Verbindung zwischen dem Zentralserver und dem jeweiligen Endgerät an das Endgerät übertragen werden.

14. Anordnung nach einem der Ansprüche 9 bis 13, **dadurch gekennzeichnet, dass** das Endgerät mit einem zusätzlichen ISDN-Anschluss ausgestattet ist, der bei Verbindungsausfall über das jeweilige lokale Netzwerk eine alternative Verbindung per ISDN herstellt und den Tunnel wieder aufbaut.

15. Anordnung nach Anspruch 14, **dadurch gekennzeichnet, dass** Mittel zur kontinuierlichen Überprüfung vorgesehen sind, welche bei Wiederherstellung der LAN-Verbindung wieder auf diese Verbindung für den Tunnel wechselt.
